# EUROPEAN PATENT SPECIFICATION

(11) **EP 3 840 433 B1**
(45) Date of publication and mention of the grant of the patent: **17.04.2024**
(21) Application number: 19217637.8
(22) Date of filing: 18.12.2019
(51) Int. Cl.: H04W 4/50, H04W 24/00, H04W 24/08

(54) **METHOD FOR GENERATING DATA FOR BENCHMARKING MOBILE RADIO NETWORKS AND METHOD FOR EVALUATING THE DATA WHICH ARE GENERATED BY THE METHOD FOR GENERATING DATA FOR BENCHMARKING MOBILE RADIO NETWORKS**
VERFAHREN ZUR ERZEUGUNG VON DATEN ZUM BENCHMARKING VON MOBILFUNKNETZWERKEN UND VERFAHREN ZUR AUSWERTUNG VON DATEN, DIE DURCH DAS VERFAHREN ZUR ERZEUGUNG VON DATEN ZUM BENCHMARKING VON MOBILFUNKNETZWERKEN ERZEUGT WERDEN
PROCÉDÉ DE GÉNÉRATION DE DONNÉES D'ÉVALUATION DE RÉSEAUX RADIO MOBILES ET PROCÉDÉ D'ÉVALUATION DES DONNÉES GÉNÉRÉES PAR LE PROCÉDÉ DE GÉNÉRATION DE DONNÉES D'ÉVALUATION DE RÉSEAUX RADIO MOBILES

(43) Date of publication of application: 23.06.2021
(73) Proprietor: Valeo Comfort and Driving Assistance, 94000 Créteil (FR)
(72) Inventor: WELLENS, Matthias, 94046 Créteil CEDEX (FR)
(74) Representative: Delaval, Guillaume Laurent

(56) References cited:
- DE-A1-102017 128 063

## Description

### FIELD OF THE INVENTION

The present disclosure relates to a method for generating data for benchmarking mobile radio networks and to a method for evaluating the data which are generated by the method for generating data for benchmarking mobile radio networks.

### BACKGROUND OF THE INVENTION

From US 2018/0213420 A1 a method for monitoring data traffic with components of a motor vehicle is known, wherein the method comprises the steps: communicating with at least one transceiver of a first radio system; communicating with at least one transceiver of a second radio system; receiving a piece of information about a data transmission via the first radio system; and initiating the data transmission via a second radio system. In order to apply this method the motor vehicle needs a special equipment.

DE 10 2017 128063 A1 concerns a telematics unit of a vehicle; this telematics unit comprises a modem and two identification modules, namely an "AUTO-SIM" for connecting to a first mobile network for telematics purposes ("automotive backend") and a "CUSTOMER-SIM" for connecting to a second mobile network for data/voice services. Performance of said mobile networks is measured/assessed by the two identification modules and obtained KPIs are returned to an application processor of the telematics unit, where the KPIs are compared; intermediate or final results may be uploaded to a cloud based service centre; assessment may be made in a passive or in an active manner, e.g. loop based with start and end parameters, under control from a cloud based server.

### SUMMARY OF THE INVENTION

The invention is defined by the subject matter of the independent claim. Advantageous enhancements are subject to the dependent claims.

### BRIEF DESCRIPTION OF THE DRAWINGS

The foregoing and other features and advantages of the present invention will become apparent to those skilled in the art to which the present invention relates upon reading the following description with reference to the accompanying drawing, in which:
- Fig. 1:: shows in an abstract way details of a system which allows to run the inventive method,
- Fig. 2:: shows a flowchart of operations which are conducted by the OTA service and by the OTA server using the system shown in figure 1 and
- Fig. 3:: shows details of the step S1 shown in the flowchart of figure 2.

### DETAILED DESCRIPTION OF THE INVENTION

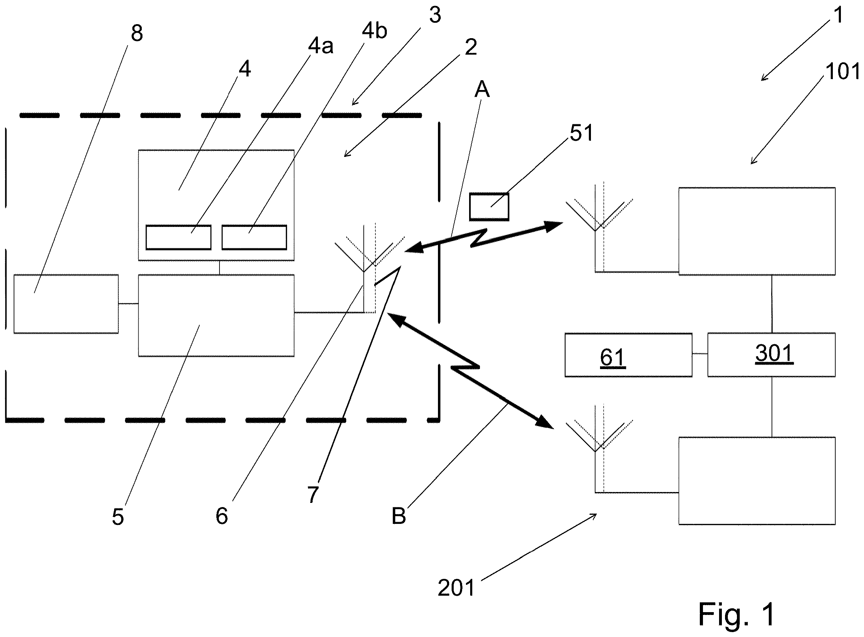

Figure 1 shows in an abstract way details of a system 1 which allows to run the inventive method. The system 1 comprises a plurality of TCUs each being part of a vehicle. Figure 1 shows exemplary a first TCU 2 of a first vehicle 3. The TCU 2 comprises an application processor 4, a cellular modem module 5, a first antenna 6, optionally at least one additional antenna 7. The TCU 2 comprises an embedded SIM 8 which supports changes of the SIM profile. Instead of an embedded SIM the TCU can comprise according to an alternative embodiment a first SIM card and a second SIM card.

The system 1 comprises a plurality of mobile radio networks, which allow access to the Internet and to the Public Switched Telephone Network, wherein Figure 1 shows a first mobile radio network 101 and a second mobile radio network 201. The system comprises an OTA server 301, which is operated as a cloud server and which is connected via the Internet to the mobile radio networks 101, 201.

The first TCU 2 is connected to at least one of the mobile radio networks 101, 201. The first double arrow A and the second double arrow B symbolize a connection between the first TCU 2 and the first mobile radio network 101 and a connection between the second TCU and the second mobile radio network 201. In order to execute performance recordings regarding the first mobile radio network 101 a loading operation 51, which is symbolized by a packet is executed. This means that software is downloaded from a server 61 of a first OEM to the TCU. The software which is downloaded is an update software for the first TCU 2. The software download is managed by the OTA server 301, wherein the OTA server 301 manages that a plurality of TCUs of vehicles of the first OEM are provided with the update software and that a performance recording of each loading operation 51 is done. Hereby the performance recording is done by the OTA server 301 as well as an OTA service 4a and a benchmark service 4b which run on the application processor 4 of the TCU 2 which is the aim of the software download.

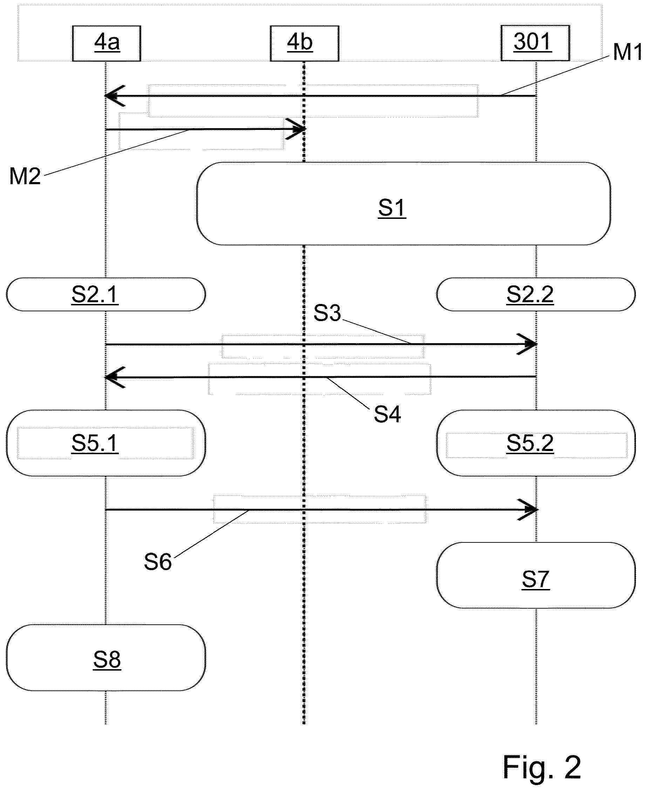

Figure 2 shows a flowchart of operations which are conducted by the OTA service 4a, the benchmark service 4b and by the OTA server 301. The OTA service 4a is symbolized by a left line, the benchmark service 4b is symbolized by a middle line and the OTA server 301 is symbolized by a right line.

With a first message M1 the availability of a loading operation 51 in form of a new software update is indicated by the OTA server 301 to the OTA service 4b.

With a second message M2, the benchmark service 4b is triggered to prepare performance recording.

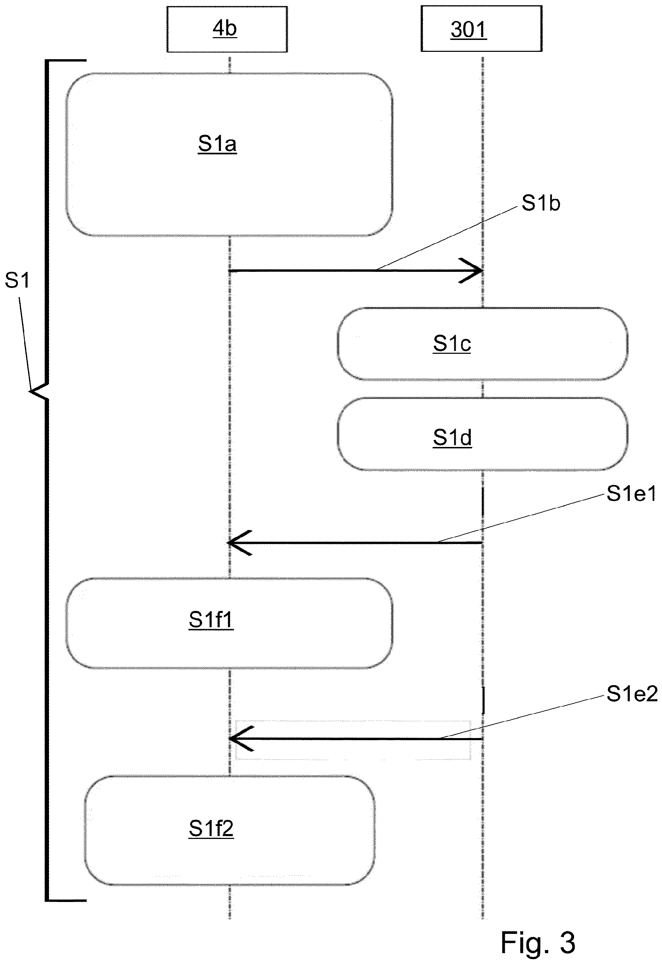

In a next step S1, a mobile radio network is elected from the group of available mobile radio networks. If necessary it is switched for example from the first mobile radio network 101 to the second mobile radio network 201, wherein the connection to the OTA server 301 is reestablished. More details of the step S1 are shown in Figure 3.

In parallel, steps S2.1 and S2.2 performance recording by the OTA service 4a and the OTA server 301 is started.

In a following, step S3 the start of the loading operation in the form of the software download is requested from the OTA service 4a by the OTA server 301.

In following, step S4 the software download is executed, wherein the source of the software may be any server of for example an OEM with access to the Internet.

In parallel, steps S5.1 and S5.2 the performance recording done by the OTA service 4a is stopped and the performance recording done by the OTA server 301 is stopped. Additionally, the results of the performance recording of the OTA service 4a are packaged by the OTA service 4a.

In a following step S6, the packaged performance data are uploaded from the OTA service 4a to the OTA server 301.

In a following step S7, all performance data of this loading operation are saved on the OTA server 301 for analysis.

In a following step S8, which may occur parallel to step S7 an update process of the TCU 2 is started using the software download.

Figure 3 shows a detailed flowchart of step S1, which is shown in Figure 2. In Figure 3 the benchmark service 4b is symbolized by a left line and the OTA server 301 is symbolized by a right line. In figure 2 step S1 has been described by: a mobile radio network is elected of the group of available mobile radio networks. If necessary, it is switched for example from the first mobile radio network 101 to the second mobile radio network 201, wherein the connection to the OTA server 301 is reestablished.

According to Figure 3, ahead of a first partial step S1a of step S1, the benchmark service 4b ensures that before switching to another mobile radio network, no safety related service that must not be interrupted currently runs. If such a service is running, the OTA server is informed and the TCU stays connected to the current mobile radio network. The benchmark service 4b also collects information of available mobile radio networks, assesses signal strength and capabilities of available networks.

In a second partial step S1b, the data on available mobile radio networks are shared with the OTA server 301.

In a third partial step S1c, the data of OTA server 301 on available mobile radio networks are evaluated and a decision, which mobile radio network should be tested, is made.

In a forth partial step S1d, it is determined by the OTA server 301 if roaming to a selected mobile radio network under test is possible for the TCU. In case that there are powerful capabilities on the network side but the TCU is an old model that cannot benefit from these capabilities, the TCU may be excluded from the benchmarking process.

If roaming is possible, the TCU 2 is instructed in a first alternative of a fifth step S1e1 via the benchmark service 4b to roam to mobile radio network under test. In a first alternative of a sixth step S1f1 the TCU 2 is detached from the current mobile radio network and attached to the mobile radio network under test in roaming mode by the benchmark service 4b. All services are reestablished.

If roaming is not possible, the TCU 2 is instructed in a second alternative of a fifth step S1e2 to download a SIM profile to enable to attach to the mobile network under test. In a second alternative of a sixth step S1f2 the TCU 2 is detached from the current mobile radio network, the newly receive SIM profile is activated and the TCU 2 is attached to the mobile radio network under test by the benchmark service 4b. All services are reestablished.

The method is continued with steps S2.1 and S2.1, shown in Figure 2.

### REFERENCE NUMERALS:

- 1: system
- 2: TCU
- 3: vehicle
- 4: application processor
- 4a: OTA service
- 4b: benchmark service
- 5: cellular modem module
- 6: first antenna of the TCU
- 7: second antenna of the TCU
- 8: eSIM

- 51: loading operation

- 61: server

- 101: first mobile radio network

- 201: second mobile radio network

- 301: OTA server

- A: first double arrow
- B: second double arrow
- M1: first message
- M2: second message
- S1: first step
- S1a: first partial step of S1
- S1b: second partial step of S1
- S1c: third partial step of S1
- S1d: forth partial step of S1
- S1e1: first alternative of fifth partial step of S1
- S1e2: second alternative of fifth partial step of S1
- S1f1: first alternative of sixth partial step of S1
- S1f2: second alternative of sixth partial step of S1
- 52.1: second step on 4a
- 52.2: second step on 301
- S3: third step
- S4: forth step
- 55.1: fifth step on 4a
- 55.2: fifth step on 301
- S6: sixth step
- S7: seventh step
- S8: eighth step

## Claims

1. Method for generating data for benchmarking mobile radio networks (101; 201) by using loading operations (51) for making performance recordings on several mobile radio networks (101; 201), the method comprising the steps:
- providing each TCU (2) of a group of vehicles (1) with a benchmark service (4b) including a SIM management to enable roaming to networks and an OTA service (4a), wherein the benchmark service (4b) and the OTA service (4a) are running on the TCU (2) of each vehicle (1) of the group of vehicles (1) and communication between each TCU (2) and a OTA server (301) is established via at least one of the several mobile radio networks (101; 201),
- identifying a data transmission campaign (e.g. software update) for a benchmarking process by the OTA server (301),
- running a data acquisition process for a selected number of vehicles (1) at individual times, wherein the following steps are executed between the TCU (2) of each vehicle and the OTA server (301):
- an availability of the loading operation is indicated by the OTA server (301) to the OTA services (4a) of the TCUs (2) to inform about a new software update to the OTA server;
- the benchmark service (4b) is triggered by the OTA service (4a) for preparation of measurement;
- the use of a specific mobile radio network (101; 201) of the group of available mobile radio networks (101; 201) is negotiated for the loading operation (51) between the benchmark service (4b) and the OTA server (301);
- performance recording of measurements by the OTA service (4a) is started and performance recording of measurements on the OTA server (301) is started;
- start of the loading operation is requested by the OTA service (4a);
- the loading operation (51) between the OTA server (301) and the OTA service (4a) is executed;
- the performance recording of measurements by the OTA service (4a) is finished and the performance recording of measurements on the OTA server (301) is finished;
- performance data of the performance recording of measurements of the OTA service (4a) is uploaded to the OTA server (301) via one of the mobile radio networks (101; 201),
- the performance data of the OTA service (4a) and the performance data of the OTA server (301) are stored in a database for benchmarking, wherein the use of a specific mobile radio network (101; 201) of the group of the available mobile radio networks (101; 201) is negotiated for the loading operation (51) between the benchmark service (4b) and the OTA server (301) by the steps:
- initial measurements are performed by the benchmark service (4b) on all mobile radio networks (101; 201) available in the vicinity of the vehicle (1);
- data of the initial measurements is uploaded to the OTA server (301),
- a selection of a certain mobile radio network (101; 201) of the group of the available mobile radio networks (101; 201) is done by the OTA server (301) on the basis of the data of the initial measurements.

2. Method according to claim 1, wherein the loading operation is a download operation of software data or of map data.

3. Method according to claim 1, wherein the loading operation is an upload operation of data recorded by the vehicle especially image data or video data.

4. Method according to at least one of the preceding claims comprising antecedent to the step: the use of a specific mobile radio network (101; 201) of the group of the available mobile radio networks (101; 201) is negotiated for the loading operation (51) between the benchmark service (4b) and the OTA server (301) the following steps are executed between the TCU (2) of each vehicle (1) and the OTA server (301):
- it is ensured by the benchmark service (4b) including a SIM management that no safety related service that must not be interrupted is executed, wherein in the case that a safety related service runs the OTA server (301) is informed and the connection of the TCU (2) to the currently selected mobile radio network (101; 201) is maintained;
- for the case that no safety related service is executed information of available mobile radio networks (101; 201) is collected by the benchmark service (4b) including a SIM management, wherein signal strength and capabilities of all available mobile radio networks (101; 201) are assessed;
- the OTA server (301) is provided by the benchmark service (4b), including a SIM management, with data of such initial measurements and with data of a location of the vehicle (1) and with data of the capabilities of the TCU 2;
- by the OTA server (301) these data are evaluated and a decision is made which mobile radio network is shall be tested;
- by the OTA server (301) it is determined if roaming to the selected mobile radio network (101; 201) is possible or not:
- if roaming is possible: the benchmark service (4b), including a SIM management, is instructed by the OTA server (301) to roam to the mobile radio network (101; 201) which is elected for testing in order to conduct the loading operation after which all disconnected services are reestablished;
if roaming is not possible: the benchmark service (4b), including a SIM management, is provided by the OTA server (301) via download with a SIM profile for registration to the mobile radio network (101; 201) which is elected for testing in order to conduct the loading operation, wherein after a switch to the elected mobile radio network (101; 201) all disconnected services are reestablished.

5. Method according to at least one of the preceding claims:
- wherein during a loading operation (51) any additional data traffic which may occur additional to a data traffic which is relevant for the performance recording is reduced or is prevented by the TCU (2),
- wherein the performance recording comprises at least two indicators out of the group of the following indicators:
- throughput of data,
- latency,
- SNIR, i.e. Signal to Noise and Interference Ratio,
- RSSI, i.e. Received Signal Strength Indicator,
- Cell ID,
- Radio Technology, e.g. GPRS, EDGE, UMTS, HSPA, LTE, LTE-A, 5G NR, WiFi, frequency,
- location in form of GNSS coordinates,
- aggregated bitrate of any further data traffic running in parallel in downlink,
- aggregated bitrate of any further data traffic running in parallel in uplink,
- loading operation success ratio, especially download success ratio,
- total loading operation duration, especially total download duration.

6. Method according to claim 5:
- wherein the performance recording is done with a given sampling rate,
- wherein as outcome of the performance recording a vector of values is generated for each appropriate indicator,
- wherein it is provided that statistics are computed by the OTA server by applying a certain statistics method e.g., averaging and/or computing the median/minimum/maximum or a specific percentile to all values of the complete vectors or by applying the statistics method to a fraction of the complete vectors.

7. Method according to at least one of the preceding claims, wherein the method comprises at least one of the following steps:
- for each performance recording which is done a mobile radio network (101; 201) is elected out of the group of the available mobile radio networks (101; 201) by a OTA server (301), wherein this selection is done on the basis of at least one criteria, wherein criteria may be e.g. campaign needs or reported measurements;
- as soon as a mobile radio network (101; 201) is selected by the OTA server (301) out of the group of the several mobile radio networks (101; 201) it is switched to the elected network either on the basis of regular data stored in a SIM of the TCU or by providing an embedded SIM of the TCU with data of the elected mobile radio network,
- safety criteria are taken into account when switching between mobile radio networks,
- discontinuity in communication is managed during the switch between mobile radio networks.

8. Method for evaluating the data, which are generated by the method for generating data for benchmarking mobile radio networks (101;201) according to at least one of the preceding claims comprising the steps
- comparing the data available for different types of vehicles (1) and/or different types of TCUs (2) and/or different types of antenna (6; 7) and/or size of loading operation (51) ;
- determining a ranking of the types of vehicles (1) and/or the types of TCUs (2) and/or the types of antenna (6; 7) and/or the size of loading operation (51).

## Patentansprüche

1. Verfahren zur Erzeugung von Daten zum Benchmarking von Mobilfunknetzen (101; 201) durch Verwendung von Ladevorgängen (51) zur Durchführung von Leistungsaufzeichnungen über mehrere Mobilfunknetze (101; 201), wobei das Verfahren die folgenden Schritte umfasst:
- Bereitstellen eines Benchmark-Dienstes (4b) einschließlich einer SIM-Verwaltung zur Aktivierung von Roaming in Netze und eines OTA-Dienstes (4a) für jede TCU (2) einer Gruppe von Fahrzeugen (1), wobei der Benchmark-Dienst (4b) und der OTA-Dienst (4a) auf der TCU (2) jedes Fahrzeugs (1) der Gruppe von Fahrzeugen (1) ausgeführt werden und eine Kommunikation zwischen jeder TCU (2) und einem OTA-Server (301) über mindestens eines der mehreren Mobilfunknetze (101; 201) hergestellt wird,
- Identifizieren einer Datenübertragungskampagne (z. B. Software-Update) für einen Benchmarking-Prozess durch den OTA-Server (301),
- Durchführen eines Datenerfassungsprozesses für eine ausgewählte Anzahl von Fahrzeugen (1) zu einzelnen Zeitpunkten, wobei die folgenden Schritte zwischen der TCU (2) jedes Fahrzeugs und dem OTA-Server (301) ausgeführt werden:
- eine Verfügbarkeit des Ladevorgangs wird den OTA-Diensten (4a) der TCUs (2) durch den OTA-Server (301) angegeben, um über ein neues Software-Update auf dem OTA-Server zu informieren;
- der Benchmark-Dienst (4b) wird durch den OTA-Dienst (4a) zur Vorbereitung einer Messung ausgelöst;
- die Verwendung eines bestimmten Mobilfunknetzes (101; 201) der Gruppe verfügbarer Mobilfunknetze (101; 201) wird für den Ladevorgang (51) zwischen dem Benchmark-Dienst (4b) und dem OTA-Server (301) verhandelt;
- eine Leistungsaufzeichnung von Messungen durch den OTA-Dienst (4a) wird gestartet und eine Leistungsaufzeichnung von Messungen auf dem OTA-Server (301) wird gestartet;
- der Start des Ladevorgangs wird durch den OTA-Dienst (4a) angefordert;
- der Ladevorgang (51) zwischen dem OTA-Server (301) und dem OTA-Dienst (4a) wird ausgeführt;
- die Leistungsaufzeichnung von Messungen durch den OTA-Dienst (4a) wird abgeschlossen und die Leistungsaufzeichnung von Messungen auf dem OTA-Server (301) wird abgeschlossen;
- Leistungsdaten der Leistungsaufzeichnung von Messungen des OTA-Dienstes (4a) werden über eines der Mobilfunknetze (101; 201) auf den OTA-Server (301) hochgeladen,
- die Leistungsdaten des OTA-Dienstes (4a) und die Leistungsdaten des OTA-Servers (301) werden zum Benchmarking in einer Datenbank gespeichert, wobei die Verwendung eines bestimmten Mobilfunknetzes (101; 201) der Gruppe der verfügbaren Mobilfunknetze (101; 201) für den Ladevorgang (51) zwischen dem Benchmark-Dienst (4b) und dem OTA-Server (301) durch die folgenden Schritte verhandelt wird:
- anfängliche Messungen werden durch den Benchmark-Dienst (4b) auf allen in der Nähe des Fahrzeugs (1) verfügbaren Mobilfunknetzen (101; 201) durchgeführt;
- Daten der anfänglichen Messungen werden auf den OTA-Server (301) hochgeladen,
- eine Auswahl eines bestimmten Mobilfunknetzes (101; 201) der Gruppe der verfügbaren Mobilfunknetze (101; 201) erfolgt durch den OTA-Server (301) auf der Grundlage der Daten der anfänglichen Messungen.

2. Verfahren nach Anspruch 1, wobei der Ladevorgang ein Download-Vorgang von Softwaredaten oder von Kartendaten ist.

3. Verfahren nach Anspruch 1, wobei der Ladevorgang ein Upload-Vorgang von durch das Fahrzeug aufgezeichneten Daten, insbesondere Bild- oder Videodaten, ist.

4. Verfahren nach mindestens einem der vorhergehenden Ansprüche, umfassend, dass vor dem Schritt: die Verwendung eines bestimmten Mobilfunknetzes (101; 201) der Gruppe der verfügbaren Mobilfunknetze (101; 201) wird für den Ladevorgang (51) zwischen dem Benchmark-Dienst (4b) und dem OTA-Server (301) verhandelt, die folgenden Schritte zwischen der TCU (2) jedes Fahrzeugs (1) und dem OTA-Server (301) ausgeführt werden:
- es wird durch den Benchmark-Dienst (4b) einschließlich einer SIM-Verwaltung sichergestellt, dass kein sicherheitsbezogener Dienst, der nicht unterbrochen werden darf, ausgeführt wird, wobei in dem Fall, dass ein sicherheitsbezogener Dienst ausgeführt wird, der OTA-Server (301) informiert wird und die Verbindung der TCU (2) mit dem derzeit ausgewählten Mobilfunknetz (101; 201) aufrechterhalten wird;
- für den Fall, dass kein sicherheitsbezogener Dienst ausgeführt wird, werden Informationen von verfügbaren Mobilfunknetzen (101; 201) durch den Benchmark-Dienst (4b) einschließlich einer SIM-Verwaltung erfasst, wobei Signalstärke und Fähigkeiten aller verfügbaren Mobilfunknetze (101; 201) bewertet werden;
- der OTA-Server (301) wird durch den Benchmark-Dienst (4b) einschließlich einer SIM-Verwaltung mit Daten solcher anfänglichen Messungen und mit Daten eines Standorts des Fahrzeugs (1) und mit Daten der Funktionen der TCU 2 bereitgestellt;
- durch den OTA-Server (301) werden diese Daten ausgewertet und es wird eine Entscheidung darüber getroffen, welches Mobilfunknetz getestet werden soll;
- durch den OTA-Server (301) wird bestimmt, ob Roaming in das ausgewählte Mobilfunknetz (101; 201) möglich ist oder nicht:
- wenn Roaming möglich ist: wird der Benchmark-Dienst (4b) einschließlich einer SIM-Verwaltung durch den OTA-Server (301) dazu angewiesen, in das Mobilfunknetz (101; 201) zu roamen, das zum Testen ausgewählt wird, um den Ladevorgang durchzuführen, woraufhin alle getrennten Dienste wiederhergestellt werden;
wenn Roaming nicht möglich ist: wird der Benchmark-Dienst (4b) einschließlich einer SIM-Verwaltung durch den OTA-Server (301) per Download mit einem SIM-Profil zur Registrierung in dem Mobilfunknetz (101; 201), das zum Testen ausgewählt wird, bereitgestellt, um den Ladevorgang durchzuführen, wobei nach einem Wechsel zu dem ausgewählten Mobilfunknetz (101; 201) alle getrennten Dienste wiederhergestellt werden.

5. Verfahren nach einem der vorhergehenden Ansprüche,
- wobei während eines Ladevorgangs (51) jeder zusätzliche Datenverkehr, der zusätzlich zu einem für die Leistungsaufzeichnung relevanten Datenverkehr auftreten kann, durch die TCU (2) reduziert oder verhindert wird,
- wobei die Leistungsaufzeichnung mindestens zwei Indikatoren aus der Gruppe der folgenden Indikatoren umfasst:
- Datendurchsatz,
- Latenz,
- SNIR, d. h. Signal-zu-Rausch-und-Interferenz-Verhältnis,
- RSSI, d. h. Empfangssignalstärkeindikator,
- Zellen-ID,
- Funktechnologie, z. B. GPRS, EDGE, UMTS, HSPA, LTE, LTE-A, 5G NR, WiFi, Frequenz,
- Standort in Form von GNSS-Koordinaten,
- aggregierte Bitrate jedes weiteren parallel im Downlink stattfindenden Datenverkehrs,
- aggregierte Bitrate jedes weiteren parallel im Uplink stattfindenden Datenverkehrs,
- Erfolgsquote des Ladevorgangs, insbesondere Download-Erfolgsquote,
- Gesamtdauer des Ladevorgangs, insbesondere Gesamtdauer des Downloads.

6. Verfahren gemäß Anspruch 5:
- wobei die Leistungsaufzeichnung mit einer vorgegebenen Abtastrate erfolgt,
- wobei als Ergebnis der Leistungsaufzeichnung ein Vektor von Werten für jeden geeigneten Indikator erzeugt wird,
- wobei vorgesehen wird, dass Statistiken durch den OTA-Server berechnet werden, indem ein bestimmtes Statistikverfahren, z. B. Mittelung und/oder Berechnung des Medians/Minimums/Maximums oder eines bestimmten Prozentsatzes, auf alle Werte der vollständigen Vektoren angewendet wird oder indem das Statistikverfahren auf einen Bruchteil der vollständigen Vektoren angewendet wird.

7. Verfahren nach mindestens einem der vorhergehenden Ansprüche, wobei das Verfahren mindestens einen der folgenden Schritte umfasst:
- für jede Leistungsaufzeichnung, die durchgeführt wird, wird ein Mobilfunknetz (101; 201) aus der Gruppe der verfügbaren Mobilfunknetze (101; 201) durch einen OTA-Server (301) ausgewählt, wobei diese Auswahl auf der Grundlage von mindestens einem Kriterium erfolgt, wobei Kriterien z. B. Kampagnenanforderungen oder gemeldete Messungen sein können;
- sobald ein Mobilfunknetz (101; 201) durch den OTA-Server (301) aus der Gruppe der mehreren Mobilfunknetze (101; 201) ausgewählt wird, erfolgt ein Wechsel zu dem ausgewählten Netz entweder auf der Grundlage regulärer Daten, die in einer SIM der TCU gespeichert sind, oder durch Bereitstellen von Daten des ausgewählten Mobilfunknetzes für eine eingebettete SIM der TCU,
- Sicherheitskriterien werden beim Wechsel zwischen Mobilfunknetzen berücksichtigt,
- Diskontinuität der Kommunikation wird während des Wechsels zwischen Mobilfunknetzen verwaltet.

8. Verfahren zur Auswertung der Daten, die durch das Verfahren zur Erzeugung von Daten zum Benchmarking von Mobilfunknetzen (101; 201) nach mindestens einem der vorhergehenden Ansprüche erzeugt werden, umfassend die folgenden Schritte:
- Vergleichen der verfügbaren Daten für verschiedene Typen von Fahrzeugen (1) und/oder verschiedene Typen von TCUs (2) und/oder verschiedene Typen von Antennen (6; 7) und/oder Größe des Ladevorgangs (51);
- Bestimmen einer Rangfolge der Typen von Fahrzeugen (1) und/oder der Typen von TCUs(2) und/oder der Typen von Antennen (6; 7) und/oder der Größe des Ladevorgangs (51).

## Revendications

1. Procédé de génération de données pour réaliser une analyse comparative de réseaux radiomobiles (101 ; 201) au moyen d'opérations de chargement (51) pour effectuer des enregistrements de performance sur plusieurs réseaux radiomobiles (101 ; 201), le procédé comprenant les étapes suivantes :
- la fourniture, à chaque TCU (2) d'un groupe de véhicules (1), d'un service d'analyse comparative (4b) comportant une gestion de SIM pour permettre une itinérance vers des réseaux et d'un service OTA (4a), le service d'analyse comparative (4b) et le service OTA (4a) s'exécutant sur la TCU (2) de chaque véhicule (1) du groupe de véhicules (1) et une communication entre chaque TCU (2) et un serveur OTA (301) étant établie via au moins un des plusieurs réseaux radiomobiles (101 ; 201),
- l'identification d'une campagne de transmission de données (par ex. une mise à jour logicielle) pour un processus de réalisation d'une analyse comparative par le serveur OTA (301),
- l'exécution d'un processus d'acquisition de données pour un nombre sélectionné de véhicules (1) à des instants individuels, les étapes suivantes étant exécutées entre la TCU (2) de chaque véhicule et le serveur OTA (301) :
- un disponibilité de l'opération de chargement est indiquée par le serveur OTA (301) aux services OTA (4a) des TCU (2) afin de les informer d'une nouvelle mise à niveau logicielle auprès du serveur OTA ;
- le service d'analyse comparative (4b) est déclenché par le service OTA (4a) pour la préparation de mesures ;
- l'utilisation d'un réseau radiomobile (101 ; 201) particulier du groupe de réseaux radiomobiles (101 ; 201) disponibles est négociée pour l'opération de chargement (51) entre le service d'analyse comparative (4b) et le serveur OTA (301) ;
- l'enregistrement de performance de mesures par le service OTA (4a) est lancé et l'enregistrement de performance de mesures sur le serveur OTA (301) est lancé ;
- le lancement de l'opération de chargement est demandé par le service OTA (4a) ;
- l'opération de chargement (51) entre le serveur OTA (301) et le service OTA (4a) est exécutée ;
- l'enregistrement de performance de mesures par le service OTA (4a) est interrompu et l'enregistrement de performance de mesures sur le serveur OTA (301) est interrompu ;
- des données de performance de l'enregistrement de performance de mesures du service OTA (4a) sont téléchargées en amont vers le serveur OTA (301) via l'un des réseaux radiomobiles (101 ; 201),
- les données de performance du service OTA (4a) et les données de performance du serveur OTA (301) sont stockées dans une base de données pour la réalisation d'une analyse comparative, l'utilisation d'un réseau radiomobile (101 ; 201) particulier du groupe de réseaux radiomobiles (101 ; 201) disponibles étant négociée pour l'opération de chargement (51) entre le service d'analyse comparative (4b) et le serveur OTA (301) par les étapes suivantes :
- des mesures initiales sont réalisées par le service d'analyse comparative (4b) sur tous les réseaux radiomobiles (101 ; 201) disponibles dans le voisinage du véhicule (1) ;
- des données des mesures initiales sont téléchargées en amont vers le serveur OTA (301),
- une sélection d'un certain réseau radiomobile (101 ; 201) du groupe des réseaux radiomobiles (101 ; 201) disponibles est effectuée par le serveur OTA (301) sur la base des données des mesures initiales.

2. Procédé selon la revendication 1, dans lequel l'opération de chargement est une opération de téléchargement en aval de données logicielles ou de données cartographiques.

3. Procédé selon la revendication 1, dans lequel l'opération de chargement est une opération de téléchargement en amont de données enregistrées par le véhicule, plus particulièrement de données d'image ou de données vidéo.

4. Procédé selon au moins une des revendications précédentes, comprenant, préalablement à l'étape : l'utilisation d'un réseau radiomobile (101 ; 201) particulier du groupe de réseaux radiomobiles (101 ; 201) disponibles est négociée pour l'opération de chargement (51) entre le service d'analyse comparative (4b) et le serveur OTA (301), les étapes suivantes, exécutées entre la TCU (2) de chaque véhicule (1) et le serveur OTA (301) :
- le service d'analyse comparative (4b) comportant une gestion de SIM veille à ce qu'aucun service lié à la sécurité ne devant pas être interrompu ne soit exécuté ; dans le cas où un service lié à la sécurité s'exécute, le serveur OTA (301) en est informé et la connexion de la TCU (2) avec le réseau radiomobile (101 ; 201) actuellement sélectionné est maintenue ;
- dans le cas où aucun service lié à la sécurité ne s'exécute, des informations relatives aux réseaux radiomobiles (101 ; 201) disponibles sont collectées par le service d'analyse comparative (4b) comportant la gestion de SIM, une intensité de signal et des capacités de tous les réseaux radiomobiles (101 ; 201) disponibles étant évaluées ;
- le service d'analyse comparative (4b) comportant la gestion de SIM fournit au serveur OTA (301) des données relatives à ces mesures initiales et des données relatives à une localisation du véhicule (1) et des données relatives aux capacités de la TCU (2) ;
- ces données sont évaluées par le serveur OTA (301) et une décision est prise quant au réseau radiomobile qu'il convient de tester ;
- le serveur OTA (301) détermine si une itinérance vers le réseau radiomobile (101 ; 201) sélectionné est ou non possible :
- si une itinérance est possible : le serveur OTA (301) donne instruction au service d'analyse comparative (4b) comportant une gestion de SIM d'effectuer une itinérance vers le réseau radiomobile (101 ; 201) qui est choisi pour être testé dans le but d'accomplir l'opération de chargement, suite à laquelle tous les services déconnectés sont rétablis ;
si une itinérance n'est pas possible : le serveur OTA (301) fournit, par téléchargement en aval, au service d'analyse comparative (4b) comportant une gestion de SIM un profil de SIM pour l'enregistrement auprès du réseau radiomobile (101 ; 201) qui est choisi pour être testé dans le but d'accomplir l'opération de chargement ; suite à un basculement sur le réseau radiomobile (101 ; 201) choisi, tous les services déconnectés sont rétablis.

5. Procédé selon au moins une des revendications précédentes :
- dans lequel, au cours d'une opération de chargement (51), tout trafic de données additionnel susceptible de survenir en plus d'un trafic de données pertinent pour l'enregistrement de performance est réduit ou est bloqué par la TCU (2),
- dans lequel l'enregistrement de performance comprend au moins deux indicateurs dans le groupe des indicateurs suivants :
- le débit utile de données,
- la latence,
- le SNIR, à savoir le rapport signal sur bruit plus interférence,
- le RSSI, à savoir l'indicateur d'intensité du signal reçu,
- l'identifiant de cellule,
- la technologie radio, par ex. GPRS, EDGE, UMTS, HSPA, LTE, LTE-A, 5G NR, WiFi, fréquence,
- la localisation sous forme de coordonnées GNSS,
- le débit binaire composite de tout trafic de données supplémentaire acheminé en parallèle sur la liaison descendante,
- le débit binaire composite de tout trafic de données supplémentaire acheminé en parallèle sur la liaison montante,
- le taux de réussite de l'opération de chargement, plus particulièrement le taux de réussite du téléchargement en aval,
- la durée totale de l'opération de chargement, plus particulièrement la durée totale du téléchargement en aval.

6. Procédé selon la revendication 5 :
- dans lequel l'enregistrement de performance s'effectue avec un taux d'échantillonnage donné,
- dans lequel un vecteur de valeurs est généré pour chaque indicateur approprié en tant que résultat de l'enregistrement de performance,
- dans lequel il est prévu un calcul de statistiques par le serveur OTA par application d'une certaine méthode statistique, par ex. par moyennage et/ou calcul de la valeur médiane/minimale/maximale ou d'un centile particulier, à toutes les valeurs des vecteurs complets ou par application de la méthode statistique à une partie des vecteurs complets.

7. Procédé selon au moins une des revendications précédentes, le procédé comprenant au moins une des étapes suivantes :
- pour chaque enregistrement de performance effectué, un réseau radiomobile (101; 201) est choisi par un serveur OTA (301) dans le groupe des réseaux radiomobiles (101 ; 201) disponibles, ce choix s'effectuant sur la base d'au moins un critère, les besoins de la campagne ou les mesures rapportées constituant des exemples de critères ;
- dès qu'un réseau radiomobile (101; 201) est sélectionné par le serveur OTA (301) dans le groupe des plusieurs réseaux radiomobiles (101 ; 201), un basculement s'effectue sur le réseau choisi soit sur la base de données ordinaires stockées dans une SIM de la TCU, soit en fournissant à une SIM embarquée de la TCU des données relatives au réseau radiomobile choisi,
- il est tenu compte de critères de sécurité lors d'un basculement entre des réseaux radiomobiles,
- toute discontinuité de communication est gérée au cours du basculement entre des réseaux radiomobiles.

8. Procédé d'évaluation des données, qui sont générées par le procédé de génération de données pour réaliser une analyse comparative de réseaux radiomobiles (101 ; 201) selon au moins une des revendications précédentes, comprenant les étapes suivantes
- la comparaison des données disponibles pour différents types de véhicules (1) et/ou différents types de TCU (2) et/ou différents types d'antenne (6 ; 7) et/ou une taille de l'opération de chargement (51) ;
- la détermination d'un classement des types de véhicules (1) et/ou des types de TCU (2) et/ou des types d'antenne (6 ; 7) et/ou de la taille de l'opération de chargement (51).
